# EUROPEAN PATENT APPLICATION

(11) **EP 3 015 322 A1**
(43) Date of publication of application: **04.05.2016**
(21) Application number: 13899903.2
(22) Date of filing: 18.12.2013
(51) Int. Cl.: B60R 22/24

(54) **THROUGH ANCHOR**

(71) Applicant: Enshu Co., Ltd., Shizuoka 438-0831 (JP)
(72) Inventor: ITO, Tadao, Iwata-shi Shizuoka 438-0077 (JP)
(74) Representative: DREISS Patentanwälte PartG mbB
(86) International application number: PCT/JP2013/083985
(87) International publication number: WO 2015/092890

(57) **Abstract**

At a through anchor, a guide piece is molded at a periphery of a through-hole of an anchor plate. A webbing is inserted-through an insert-through hole of the guide piece, and the webbing is slidably supported by the guide piece. Further, the guide piece is not fixed to an entire outer peripheral end surface of the anchor plate. Here, an anchor plate thickness direction dimension of a thick portion, that is formed at an edge portion of the through-hole periphery of the anchor plate, is made to be larger than other portions of the anchor plate. Therefore, positional offset of the guide piece with respect to the anchor plate can be suppressed.

## Description

### Technical Field

The present invention relates to a through anchor through which a webbing, that is applied to an occupant of a vehicle, is inserted.

### Background Art

In the through anchor disclosed in Japanese Patent Application Laid-Open (JP-A) No. 2013-91446, a webbing insert-through hole is formed so as to pass-through a metal plate, and a resin molded portion is fixed to the periphery of the webbing insert-through hole excepting the entire outer peripheral end surface of the metal plate.

Here, in this through anchor, because the resin molded portion is not fixed to the entire outer peripheral end surface of the metal plate, it is preferable to be able to suppress positional offset of the resin molded portion with respect to the metal plate.

### DISCLOSURE OF INVENTION

### Technical Problem

In view of the above-described circumstances, an object of the present invention is to provide a through anchor that can suppress positional offset of a slide supporting member with respect to a main body member, even in a case in which the slide supporting member is not fixed to the entire outer peripheral end surface of the main body member.

### Solution to Problem

A through anchor of a first aspect of the present invention comprises: a main body member in which is formed a through-hole through which a webbing, that is applied to an occupant of a vehicle, is inserted; a thick portion that is provided at an edge portion of a through-hole periphery of the main body member, and whose main body member thickness direction dimension is made to be larger than other portions of the main body member; and a slide supporting member that is fixed to the periphery of the through-hole excepting an entire outer peripheral end surface of the main body member, and that slidably supports the webbing.

In a through anchor of a second aspect of the present invention, in the through anchor of the first aspect of the present invention, a peripheral surface of the thick portion is curved.

In a through anchor of a third aspect of the present invention, in the through anchor of the first aspect or the second aspect of the present invention, a planar portion is provided at a portion, that is at a side opposite the through-hole, of the thick portion.

In a through anchor of a fourth aspect of the present invention, in the through anchor of any one of the first aspect through the third aspect of the present invention, a peripheral surface, that is at a side opposite the through-hole, of the thick portion extends-out toward a main body member thickness direction outer side.

In a through anchor of a fifth aspect of the present invention, in the through anchor of any one of the first aspect through the fourth aspect of the present invention, a peripheral surface, that is at a side opposite the through-hole, of the thick portion is inclined in a direction heading toward a main body member thickness direction outer side while heading toward a through-hole side.

In a through anchor of a sixth aspect of the present invention, in the through anchor of any one of the first aspect through the fifth aspect of the present invention, a peripheral surface at a through-hole side of the thick portion is inclined in a direction heading toward a main body member thickness direction inner side while heading toward the through-hole side.

In a through anchor of a seventh aspect of the present invention, the through anchor of any one of the first aspect through the sixth aspect of the present invention comprises a corner portion that is provided at the thick portion and that projects-out toward a main body member thickness direction outer side.

In a through anchor of an eighth aspect of the present invention, in the through anchor of any one of the first aspect through the seventh aspect of the present invention, an end surface at a through-hole side of the thick portion is made to be planar.

### Advantageous Effects of Invention

In the through anchor of the first aspect of the present invention, the through-hole is formed in the main body member, and the webbing, that is applied to an occupant of the vehicle, is inserted-through the through-hole. Moreover, the slide supporting member is fixed to the periphery of the through-hole excepting the entire outer peripheral end surface of the main body member, and the slide supporting member slidably supports the webbing.

Here, the thick portion is provided at the edge portion of the through-hole periphery of the main body member. The main body member thickness direction dimension of the thick portion is made to be larger than the other portions of the main body member. Therefore, the surface area of contact of the slide supporting member with the main body member can be made to be large, and positional offset of the slide supporting member with respect to the main body member can be suppressed.

In the through anchor of the second aspect of the present invention, the peripheral surface of the thick portion is curved. Therefore, the surface area of contact of the slide supporting member with the main body member can effectively be made to be large, and positional offset of the slide supporting member with respect to the main body member can be suppressed effectively.

In the through anchor of the third aspect of the present invention, the planar portion is provided at the portion, that is at the side opposite the through-hole, of the thick portion. Therefore, positional offset of the slide supporting member with respect to the main body member can be suppressed effectively.

In the through anchor of the fourth aspect of the present invention, the peripheral surface, that is at the side opposite the through-hole, of the thick portion extends-out toward the main body member thickness direction outer side. Therefore, positional offset of the slide supporting member with respect to the main body member can be suppressed effectively.

In the through anchor of the fifth aspect of the present invention, the peripheral surface, that is at the side opposite the through-hole, of the thick portion is inclined in the direction heading toward the main body member thickness direction outer side while heading toward the through-hole side. Therefore, positional offset of the slide supporting member with respect to the main body member can be suppressed effectively.

In the through anchor of the sixth aspect of the present invention, the peripheral surface at the through-hole side of the thick portion is inclined in the direction heading toward the main body member thickness direction inner side while heading toward the through-hole side. Therefore, the thickness dimension of the slide supporting member, that is fixed to the through-hole side portion of the thick portion, can easily be made to be large.

In the through anchor of the seventh aspect of the present invention, the corner portion that is provided at the thick portion projects-out toward the main body member thickness direction outer side. Therefore, positional offset of the slide supporting member with respect to the main body member can be suppressed effectively.

In the through anchor of the eighth aspect of the present invention, the end surface at the through-hole side of the thick portion is made to be planar. Therefore, positional offset of the slide supporting member with respect to the main body member can be suppressed effectively.

### BRIEF DESCRIPTION OF DRAWINGS

Fig. 1 is a front view showing a through anchor relating to a first embodiment of the present invention, and seen from a vehicle transverse direction inner side in a vehicle mounted state.
Fig. 2 is an exploded perspective view showing the through anchor relating to the first embodiment of the present invention.
Fig. 3 is a front view showing an anchor plate of the through anchor relating to the first embodiment of the present invention, and seen from the vehicle transverse direction inner side in the vehicle mounted state.
Fig. 4 is a cross-sectional view (a cross-sectional view along line 4-4 of Fig. 1) showing the through anchor relating to the first embodiment of the present invention.
Fig. 5 is a cross-sectional view (a cross-sectional view at the position of line 4-4 of Fig. 1) showing the through anchor relating to a first modified example of the first embodiment of the present invention.
Fig. 6 is a cross-sectional view (a cross-sectional view at the position of line 4-4 of Fig. 1) showing the through anchor relating to a second modified example of the first embodiment of the present invention.
Fig. 7 is a cross-sectional view (a cross-sectional view at the position of line 7-7 of Fig. 1) showing a through anchor relating to a second embodiment of the present invention.
Fig. 8 is a cross-sectional view (a cross-sectional view at the position of line 7-7 of Fig. 1) showing a through anchor relating to a third embodiment of the present invention.
Fig. 9 is a cross-sectional view (a cross-sectional view at the position of line 7-7 of Fig. 1) showing a through anchor relating to a fourth embodiment of the present invention.
Fig. 10 is a cross-sectional view (a cross-sectional view at the position of line 7-7 of Fig. 1) showing a through anchor relating to a fifth embodiment of the present invention.
Fig. 11 is a cross-sectional view (a cross-sectional view at the position of line 7-7 of Fig. 1) showing a through anchor relating to a sixth embodiment of the present invention.
Fig. 12 is a cross-sectional view (a cross-sectional view at the position of line 7-7 of Fig. 1) showing a through anchor relating to a seventh embodiment of the present invention.

### BEST MODES FOR CARRYING OUT THE INVENTION

### [First Embodiment]

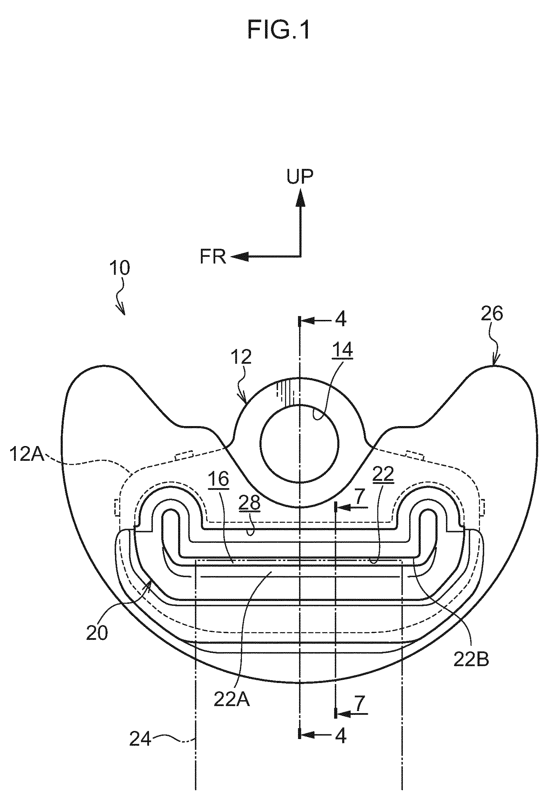

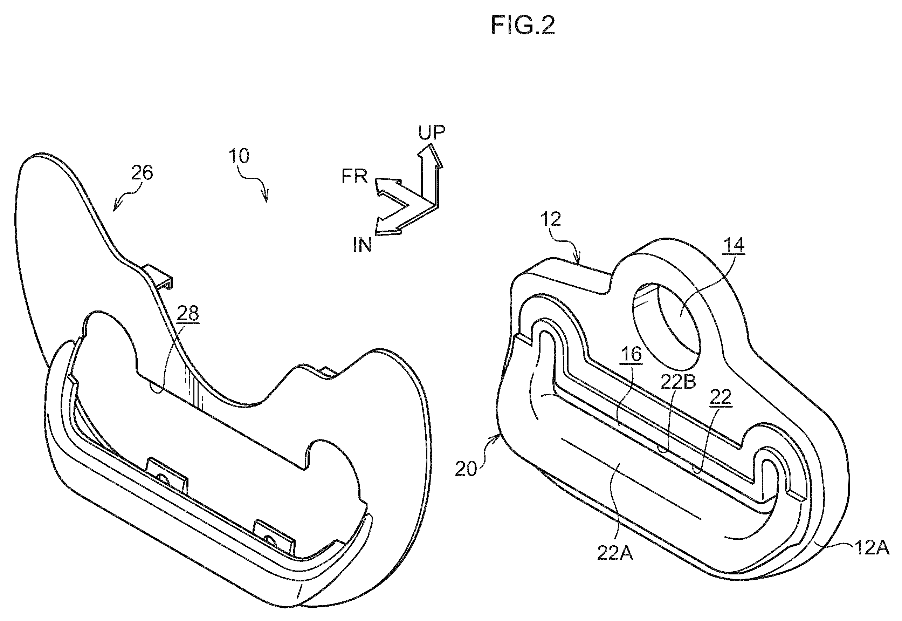

A front view, in which a through anchor 10 (webbing hanger) relating to a first embodiment of the present invention is seen from a vehicle transverse direction inner side in a vehicle mounted state, is shown in Fig. 1, and an exploded perspective view of the through anchor 10 is shown in Fig. 2. Note that, in the drawings, the vehicle front side in a case in which the through anchor 10 is mounted to the vehicle is indicated by arrow FR, the vehicle transverse direction inner side is indicated by arrow IN, and the upper side is indicated by arrow UP.

The through anchor 10 relating to the present embodiment is used as a so-called slip joint (shoulder anchor) in a so-called three-point seatbelt device. The through anchor 10 is disposed at the upper portion of the vehicle body at the vehicle transverse direction outer side and vehicle rear side of a seat (not illustrated) for seating of an occupant of a vehicle (an automobile).

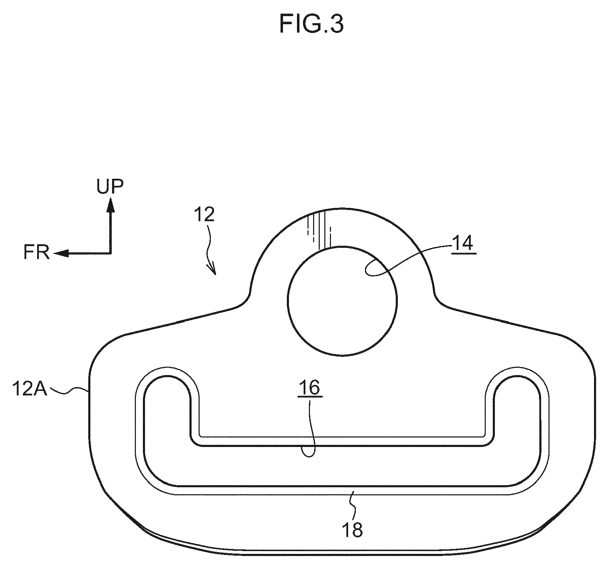

As shown in Fig. 1 through Fig. 4, the through anchor 10 has an anchor plate 12 that is plate-shaped and is made of metal (a steel material) and serves as a main body member (strength member). The anchor plate 12 is produced by press punching. The vertically intermediate portion of the anchor plate 12 is bent, and the portion further toward the lower side than the bent portion of the anchor plate 12 is inclined in a direction heading toward the vehicle transverse direction inner side while heading toward the lower side.

A fixing hole 14, that is circular and serves as a mounting portion, is formed to pass-through the upper portion of the anchor plate 12, and the anchor plate 12 is fixed (mounted) to the vehicle body by a bolt (not illustrated) that is fit-into the fixing hole 14. Therefore, the through anchor 10 is made able to rotate in the vehicle longitudinal direction around the bolt.

A through-hole 16 that is U-shaped as seen from the vehicle transverse direction is formed so as to pass-through the bent portion at the vertical direction intermediate portion of the anchor plate 12. The central portion of the through-hole 16 extends in the vehicle longitudinal direction, and the vehicle front side end portion and the vehicle rear side end portion of the through-hole 16 extend upward at substantial right angles.

A thick portion 18 (bulging portion) is formed at the anchor plate 12 at the entire peripheral direction edge portion of the through-hole 16. The anchor plate 12 thickness direction dimension of the thick portion 18 is made to be larger than the other portions of the anchor plate 12. The entire peripheral surface of the thick portion 18 is curved in a convex shape, and the thick portion 18 protrudes-out toward the vehicle transverse direction inner side and the vehicle transverse direction outer side.

The anchor plate 12 thickness direction dimension of the portion, that is at the side opposite the through-hole 16, of the thick portion 18 gradually becomes larger while heading toward the through-hole 16 side. The peripheral surface of the portion, that is at the side opposite the through-hole 16, of the thick portion 18 is inclined in a direction heading toward the anchor plate 12 thickness direction outer side while heading toward the through-hole 16 side. The anchor plate 12 thickness direction dimension of the through-hole 16 side portion of the thick portion 18 gradually becomes smaller while heading toward the through-hole 16 side. The peripheral surface of the through-hole 16 side portion of the thick portion 18 is inclined in the direction heading toward the anchor plate 12 thickness direction inner side while heading toward the through-hole 16 side (is inclined in the direction heading toward the anchor plate 12 thickness direction outer side while heading toward the side opposite the through-hole 16).

As shown in Fig. 1, Fig. 2 and Fig. 4, a guide piece 20, that is made of resin and serves as a slide supporting member (insert-through portion), is molded (fixed) by integral molding (insert molding) at the vertical direction intermediate portion of the anchor plate 12. The guide piece 20 covers the entire periphery of the through-hole 16 of the anchor plate 12 (the entire peripheral direction edge portion and the inner peripheral surface of the through-hole 16) from the vehicle transverse direction inner side, the vehicle transverse direction outer side and the through-hole 16 side. The guide piece 20 is disposed only in a vicinity of the entire periphery of the through-hole 16, and the guide piece 20 does not cover the entirety of an outer peripheral end surface 12A of the anchor plate 12. The guide piece 20 covers the entire peripheral surface of the thick portion 18 of the anchor plate 12, and the guide piece 20 is anchored on the thick portion 18.

An insert-through hole 22 that is U-shaped as seen from the vehicle transverse direction is formed so as to pass-through the guide piece 20, and the insert-through hole 22 is disposed within the through-hole 16 of the anchor plate 12. The insert-through hole 22 is made to be a shape that is small and substantially similar with respect to the through-hole 16. The central portion of the insert-through hole 22 extends in the vehicle longitudinal direction, and the vehicle front side end portion and the vehicle rear side end portion of the insert-through hole 22 extend upward at substantial right angles.

The lower side surface of the central portion of the insert-through hole 22 is made to be a slide surface 22A (supporting surface). The slide surface 22A is curved in a convex shape in a substantially semicircular arc shape in cross-section as seen from the vehicle longitudinal direction, and is disposed along the peripheral surface of the through-hole 16 side portion of the thick portion 18 of the anchor plate 12. The upper side surface of the central portion of the insert-through hole 22 is made to be a facing surface 22B that is planar, and the facing surface 22B faces the substantially vehicle transverse direction central portion of the slide surface 22A.

A webbing 24 that is shaped as an elongated belt is inserted-through (passed-through) the central portion of the insert-through hole 22 (the central portion of the through-hole 16) so as to be able to move in the length direction. The proximal end side, that is further toward the vehicle transverse direction outer side (the vehicle outer side) than the insert-through hole 22, of the webbing 24 extends-out toward the lower side of the through anchor 10, and is taken-up on a retractor (not illustrated). The retractor is fixed to the vehicle transverse direction outer side and the lower side of the seat for vehicle occupant seating, and urges the webbing 24 in the take-up direction. The distal end side, that is further toward the vehicle transverse direction inner side (the vehicle cabin side) than the insert-through hole 22, of the webbing 24 extends-out toward the lower side of the through anchor 10 and is fixed to the vehicle transverse direction outer side and the lower side of the seat. Therefore, due to the urging force of the retractor, the webbing 24 is supported (hung) in a state of contacting the slide surface 22A of the insert-through hole 22 and being folded-back, and the webbing 24 slides on and is guided by the slide surface 22A at the time when the webbing 24 is moved in the length direction with respect to the insert-through hole 22.

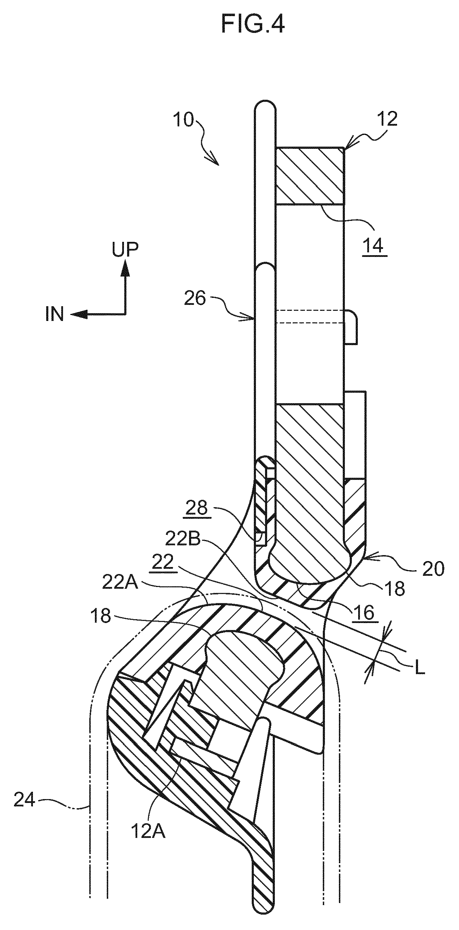

Note that width dimension L of the central portion of the insert-through hole 22 (the dimension in the direction orthogonal to the thickness direction of the portion of the anchor plate 12 further toward the lower side than the insert-through hole 22 and the length direction of the insert-through hole 22 central portion (the vehicle longitudinal direction), refer to Fig. 4) is made to be greater than or equal to the thickness dimension of the webbing 24 and less than or equal to two times the thickness dimension of the webbing 24, in the entire length direction of the central portion of the insert-through hole 22 (or at only the length direction central portion or at only the length direction both end portions).

The webbing 24 is, at the portion thereof further toward the distal end side than the through anchor 10 (the insert-through hole 22), inserted-through a tongue (not illustrated), and the tongue is made to be movable along the length direction of the webbing 24. A buckle (not illustrated) is mounted to the vehicle transverse direction inner side and the lower side of the seat. Due to the webbing 24 being pulled-out from the retractor against the urging force and the tongue being engaged with the buckle, the webbing 24 is applied to the vehicle occupant (not illustrated) who is seated in the seat.

At the time when the webbing 24 is applied to the vehicle occupant, the portion, that is further toward the distal end side than the through anchor 10 (the insert-through hole 22), of the webbing 24 extends-out toward a vehicle obliquely front lower side from the through anchor 10, and the through anchor 10 is pivoted toward the vehicle front side. Moreover, at the time of an emergency of the vehicle (at the time of a collision or the like), the pulling-out of the webbing 24 from the retractor is locked by the retractor.

As shown in Fig. 1, Fig. 3 and Fig. 4, a cover 26, that is substantially sideways C-shaped and is made of resin and serves as a covering member, is assembled to the anchor plate 12. The cover 26 covers the vehicle transverse direction inner side of the anchor plate 12. The cover 26 does not cover the fixing hole 14 (including the entire periphery of the fixing hole 14) of the anchor plate 12, and the cover 16 exposes the fixing hole 14 to the vehicle transverse direction inner side. A through-hole 28, that is substantially U-shaped as seen from the vehicle transverse direction, is formed so as to pass-through the vertical direction intermediate portion of the cover 26. The through-hole 28 exposes the insert-through hole 22 of the guide piece 20 (including the entire periphery of the insert-through hole 22) to the vehicle transverse direction inner side, and the webbing 24 is passed (inserted) therethrough.

### Operation of the present embodiment is described next.

At the through anchor 10 of the above-described structure, the guide piece 20 is molded at the periphery of the through-hole 16 of the anchor plate 12, and the webbing 24 is inserted-through the insert-through hole 22 of the guide piece 20 so as to be movable along the length direction, and the webbing 24 is slidably supported by the slide surface 22A of the guide piece 20.

Further, the guide piece 20 is disposed only at the entire periphery of the through-hole 16 of the anchor plate 12, and exposes the entire outer peripheral end surface 12A of the anchor plate 12.

Here, the thick portion 18 is formed at the entire peripheral direction edge portion of the through-hole 16 of the anchor plate 12. The anchor plate 12 thickness direction dimension of the thick portion 18 is made to be larger than the other portions of the anchor plate 12, and the guide piece 20 is anchored on the thick portion 18.

Therefore, the surface area of contact of the guide piece 20 with the anchor plate 12 can be made to be large by the thick portion 18. Moreover, the surface area of contact of the guide piece 20 with the anchor plate 12 can be made to be large even when compared with a case in which a concave portion were to be formed at the edge portion of the through-hole 16 periphery of the anchor plate 12 instead of the thick portion 18. Accordingly, contraction after molding of the guide piece 20 (at the time of post-crystallization) can be suppressed, and deformation (expansion and contraction) and the like due to changes in temperature of the guide piece 20 can be suppressed, and positional offset, toward the insert-through hole 22 side and the side opposite the insert-through hole 22, of the guide piece 20 with respect to the anchor plate 12 can be suppressed.

Due thereto, positional offset in the vertical direction (the transverse direction of the central portion of the insert-through hole 22) of the guide piece 20 with respect to the anchor plate 12 can be suppressed, and the accuracy of the width dimension L of the insert-through hole 22 central portion of the guide piece 20 can be increased. Therefore, the moving performance of the webbing 24 in the length direction with respect to the insert-through hole 22 can be improved. Further, folding of the webbing 24 over on itself within the insert-through hole 22, and the occurrence of shifting of the webbing 24 toward one length direction side of the insert-through hole 22 (so-called jamming) can be suppressed.

Moreover, positional offset in the vehicle longitudinal direction (the length direction of the central portion of the insert-through hole 22) of the guide piece 20 with respect to the anchor plate 12 also can be suppressed, and the accuracy of the length direction dimension of the insert-through hole 22 central portion also can be increased. Therefore, the moving performance of the webbing 24 in the length direction with respect to the insert-through hole 22 can be improved more. Further, folding of the webbing 24 over on itself within the insert-through hole 22, and the occurrence of shifting of the webbing 24 toward one length direction side of the insert-through hole 22 (so-called jamming) can be suppressed more.

Moreover, the peripheral surface of the thick portion 18 is curved. Therefore, the surface area of contact of the guide piece 20 with the anchor plate 12 can be effectively made to be large by the thick portion 18, and positional offset, toward the insert-through hole 22 side and the side opposite the insert-through hole 22, of the guide piece 20 with respect to the anchor plate 12 can be suppressed effectively.

Further, the peripheral surface, of the portion that is at the side opposite the through-hole 16, of the thick portion 18 is inclined in the direction heading toward the anchor plate 12 thickness direction outer side while heading toward the through-hole 16 side. Therefore, positional offset, toward the insert-through hole 22 side, of the guide piece 20 with respect to the anchor plate 12 can be suppressed more effectively.

Moreover, the peripheral surface at the through-hole 16 side portion of the thick portion 18 is inclined in the direction heading toward the anchor plate 12 thickness direction outer side while heading toward the side opposite the through-hole 16. Therefore, positional offset, toward the side opposite the insert-through hole 22, of the guide piece 20 with respect to the anchor plate 12 can be suppressed more effectively.

Further, the peripheral surface at the through-hole 16 side portion of the thick portion 18 is inclined in a direction heading toward the anchor plate 12 thickness direction inner side while heading toward the through-hole 16 side. Therefore, the thickness dimension of the slide surface 22A position of the guide piece 20 can be made to be large, and, at the time of an emergency of the vehicle (at the time of a collision or the like), the strength that is needed at the slide surface 22A position of the guide piece 20 with respect to load, that is inputted from the vehicle occupant via the webbing 24 to the slide surface 22A of the guide piece 20, can be ensured easily. Due thereto, decreasing the size of the anchor plate 12 can be made possible.

Moreover, as described above, the thick portion 18 is formed at the entire peripheral direction edge portion of the through-hole 16 of the anchor plate 12. Therefore, stress concentrating at the guide piece 20 at the edge portion position of the through-hole 16 periphery of the anchor plate 12, that is due to contraction after molding (at the time of post-crystallization), deformation (expansion and contraction) due to temperature changes, deterioration over time, and the like of the guide piece 20, can be suppressed, and the guide piece 20 breaking can be suppressed. Moreover, even if load is inputted from the vehicle occupant via the webbing 24 to the guide piece 20 at the time of an emergency of the vehicle (at the time of a collision or the like), stress concentrating at the guide piece 20 at the edge portion position of the through-hole 16 periphery of the anchor plate 12 can be suppressed, and the guide piece 20 breaking can be suppressed. Moreover, even if the guide piece 20 were to break, the webbing 24 being damaged by the edge portion of the through-hole 16 periphery of the anchor plate 12 can be suppressed.

Further, as described above, the thick portion 18 is formed at the entire peripheral direction edge portion of the through-hole 16 of the anchor plate 12. Therefore, the fluidity of the resin at the time of molding the guide piece 20 can be made to be good and molding of the guide piece 20 can be facilitated, as compared with a case in which a concave portion were to be provided instead of the thick portion 18 at the edge portion of the through-hole 16 periphery of the anchor plate 12.

### [Second Embodiment]

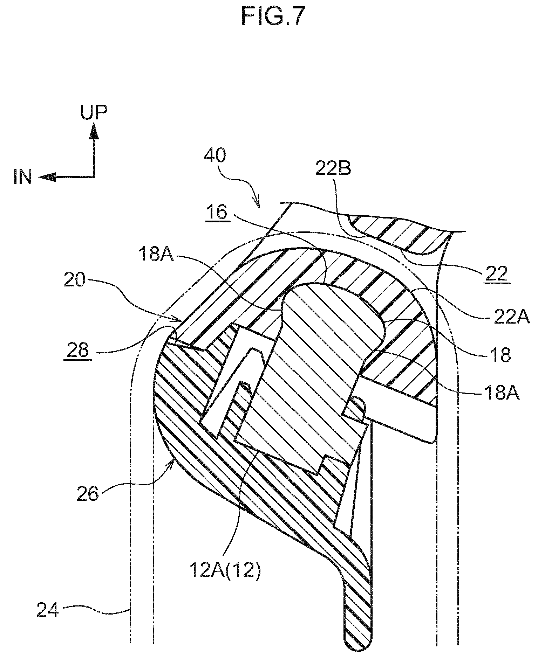

A through anchor 40 (webbing hanger) relating to a second embodiment of the present invention is shown in Fig. 7 in a cross-sectional view (a cross-sectional view at the position of line 7-7 of Fig. 1).

The through anchor 40 relating to the present embodiment is a structure that is substantially similar to the above-described first embodiment, but differs with respect to the following point.

As shown in Fig. 7, at the through anchor 40 relating to the present embodiment, at the anchor plate 12, the peripheral surface of the portion, that is at the side opposite the through-hole 16, of the thick portion 18 is made to be a planar portion 18A. The planar portion 18A is inclined in a direction heading toward the anchor plate 12 thickness direction outer side while heading toward the through-hole 16 side.

Here, the through anchor 40 relating to the present embodiment as well can exhibit operation and effects that are similar to those of the above-described first embodiment.

In particular, the peripheral surface of the portion, that is at the side opposite the through-hole 16, of the thick portion 18 is made to be the planar portion 18A, and is inclined in the direction heading toward the anchor plate 12 thickness direction outer side while heading toward the through-hole 16 side. Therefore, positional offset, toward the insert-through hole 22 side, of the guide piece 20 with respect to the anchor plate 12 can be suppressed more effectively.

### [Third Embodiment]

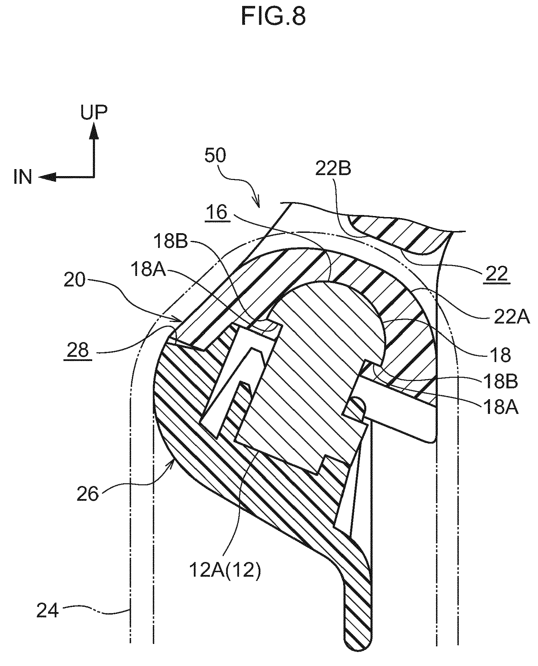

A through anchor 50 (webbing hanger) relating to a third embodiment of the present invention is shown in Fig. 8 in a cross-sectional view (a cross-sectional view at the position of line 7-7 of Fig. 1).

The through anchor 50 relating to the present embodiment is a structure that is substantially similar to the above-described first embodiment, but differs with respect to the following point.

As shown in Fig. 8, at the through anchor 50 relating to the present embodiment, at the anchor plate 12, the cross-section, as seen from the vehicle longitudinal direction, of the thick portion 18 is made to be semicircular, and the peripheral surface of the through-hole 16 side portion of the thick portion 18 is curved in a convex shape in a semicircular arc shape in cross-section. The end surface, that is at the side opposite the through-hole 16, of the thick portion 18 is made to be the planar portion 18A, and the planar portion 18 extends-out at a right angle toward the anchor plate 12 thickness direction outer side.

The portion, that is between the peripheral surface of the through-hole 16 side portion of the thick portion 18 and the end surface (the planar portion 18A) at the side opposite the through-hole 16 of the thick portion 18, is made to be a corner portion 18B. The corner portion 18B projects-out toward the anchor plate 12 thickness direction outer side, and the internal angle thereof is an acute angle or a right angle.

Here, the through anchor 50 relating to the present embodiment as well can exhibit operation and effects that are similar to those of the above-described first embodiment.

In particular, the end surface, that is at the side opposite the through-hole 16, of the thick portion 18 is made to be the planar portion 18A and extends-out at a right angle toward the angle plate 12 thickness direction outer side. Therefore, positional offset, toward the insert-through hole 22 side, of the guide piece 20 with respect to the anchor plate 12 can be suppressed more effectively.

Moreover, the portion, that is between the peripheral surface of the through-hole 16 side portion of the thick portion 18 and the end surface (the planar portion 18A) at the side opposite the through-hole 16 of the thick portion 18, is made to be the corner portion 18B. Therefore, due to the guide piece 20 being anchored effectively on the corner portion 18B, positional offset, toward the insert-through hole 22 side and the side opposite the insert-through hole 22, of the guide piece 20 with respect to the anchor plate 12 can be suppressed more effectively.

### [Fourth Embodiment]

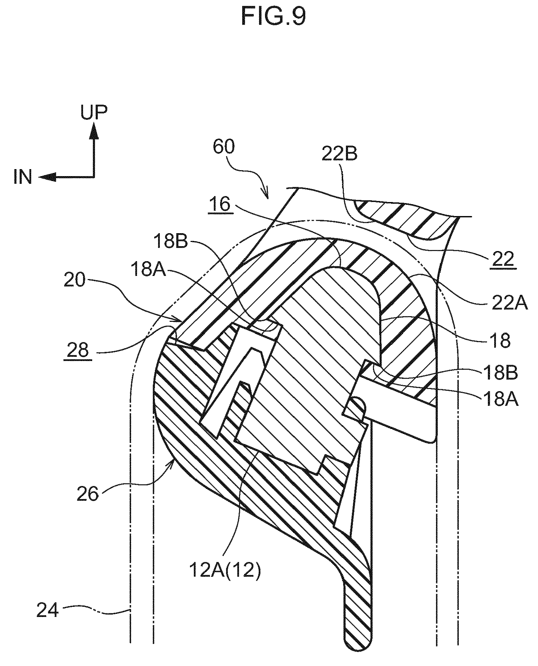

A through anchor 60 (webbing hanger) relating to a fourth embodiment of the present invention is shown in Fig. 9 in a cross-sectional view (a cross-sectional view at the position of line 7-7 of Fig. 1).

The through anchor 60 relating to the present embodiment is a structure that is substantially similar to the above-described first embodiment, but differs with respect to the following point.

As shown in Fig. 9, at the through anchor 60 relating to the present embodiment, at the anchor plate 12, the cross-section, as seen from the vehicle longitudinal direction, of the thick portion 18 is made to be substantially trapezoidal, and the end surface at the through-hole 16 side of the thick portion 18 is curved in a convex shape.

The peripheral surface of the through-hole 16 side portion of the thick portion 18 (except for the end surface at the through-hole 16 side) is made to be planar, and is inclined in the direction heading toward the anchor plate 12 thickness direction inner side while heading toward the through-hole 16 side (is inclined in the direction heading toward the anchor plate 12 thickness direction outer side while heading toward the side opposite the through-hole 16). The end surface, that is at the side opposite the through-hole 16, of the thick portion 18 is made to be the planar portion 18A, and the planar portion 18A extends-out at a right angle toward the anchor plate 12 thickness direction outer side.

The portion, that is between the peripheral surface of the through-hole 16 side portion of the thick portion 18 and the end surface (the planar portion 18A) at the side opposite the through-hole 16 of the thick portion 18, is made to be the corner portion 18B. The corner portion 18B projects-out toward the anchor plate 12 thickness direction outer side, and the interior angle thereof is made to be an acute angle.

Here, the through anchor 60 relating to the present embodiment as well can exhibit operation and effects that are similar to those of the above-described first embodiment.

In particular, the end surface, that is at the side opposite the through-hole 16, of the thick portion 18 is made to be the planar portion 18A and extends-out at a right angle toward the angle plate 12 thickness direction outer side. Therefore, positional offset, toward the insert-through hole 22 side, of the guide piece 20 with respect to the anchor plate 12 can be suppressed more effectively.

Moreover, the portion, that is between the peripheral surface of the through-hole 16 side portion of the thick portion 18 and the end surface (the planar portion 18A) at the side opposite the through-hole 16 of the thick portion 18, is made to be the corner portion 18B. Therefore, due to the guide piece 20 being anchored effectively on the corner portion 18B, positional offset, toward the insert-through hole 22 side and the side opposite the insert-through hole 22, of the guide piece 20 with respect to the anchor plate 12 can be suppressed more effectively.

Further, the peripheral surface of the through-hole 16 side portion of the thick portion 18 (except for the end surface at the through-hole 16 side) is made to be planar, and is inclined in the direction heading toward the anchor plate 12 thickness direction inner side while heading toward the through-hole 16 side. Therefore, the thickness dimension of the slide surface 22A position of the guide piece 20 can more easily be made to be large, and the strength that is needed at the slide surface 22A position of the guide piece 20 with respect to load, that is inputted from the vehicle occupant via the webbing 24 to the slide surface 22A of the guide piece 20 at the time of an emergency of the vehicle (at the time of a collision or the like), can be ensured more easily. Due thereto, decreasing the size of the anchor plate 12 can be made to be even more possible.

### [Fifth Embodiment]

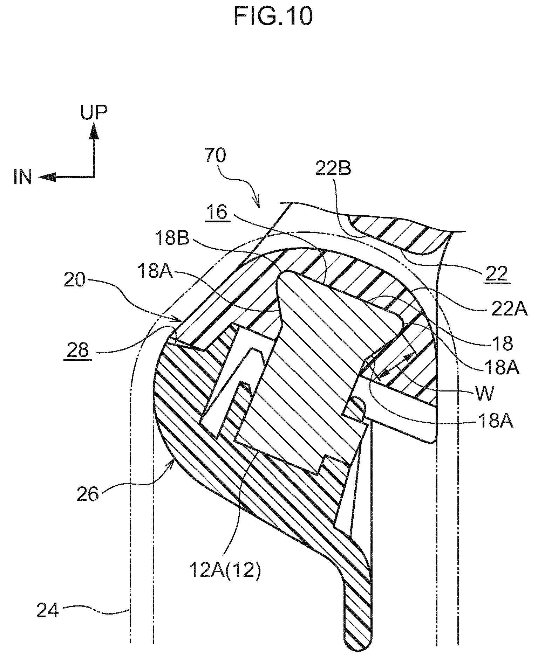

A through anchor 70 (webbing hanger) relating to a fifth embodiment of the present invention is shown in Fig. 10 in a cross-sectional view (a cross-sectional view at the position of line 7-7 of Fig. 1).

The through anchor 70 relating to the present embodiment is a structure that is substantially similar to the above-described first embodiment, but differs with respect to the following point.

As shown in Fig. 10, at the through anchor 70 relating to the present embodiment, at the anchor plate 12, the cross-section, as seen from the vehicle longitudinal direction, of the thick portion 18 is made to be a substantially inverse trapezoid shape, and the end surface at the through-hole 16 side of the thick portion 18 is planar, and is disposed perpendicularly with respect to the plate surface of the anchor plate 12.

The peripheral surface of the portion, that is at the side opposite the through-hole 16, of the thick portion 18 is made to be the planar portion 18A, and the planar portion 18A is inclined in the direction heading toward the anchor plate 12 thickness direction outer side while heading toward the through-hole 16 side. The portion, that is between the end surface at the through-hole 16 side of the thick portion 18 and the peripheral surface (the planar portion 18A) of the portion at the side opposite the through-hole 16 of the thick portion 18, is made to be the corner portion 18B. The corner portion 18B projects-out toward the anchor plate 12 thickness direction outer side, and the interior angle thereof is made to be an acute angle.

Here, the through anchor 70 relating to the present embodiment as well can exhibit operation and effects that are similar to those of the above-described first embodiment.

In particular, the peripheral surface of the portion, that is at the side opposite the through-hole 16, of the thick portion 18 is made to be the planar portion 18A and is inclined in the direction heading toward the anchor plate 12 thickness direction outer side while heading toward the through-hole 16 side. Therefore, positional offset, toward the insert-through hole 22 side, of the guide piece 20 with respect to the anchor plate 12 can be suppressed more effectively.

Moreover, a width dimension W (see Fig. 10) of the planar portion 18A with respect to the protruding-out dimension of the thick portion 18 toward the anchor plate 12 thickness direction outer side can be made to be large. Therefore, the width dimension W of the planar portion 18A can effectively be made to be large, and positional offset, toward the insert-through hole 22 side, of the guide piece 20 with respect to the anchor plate 12 can be suppressed more effectively.

Further, the end surface at the through-hole 16 side of the thick portion 18 is planar, and is disposed perpendicularly with respect to the plate surface of the anchor plate 12. Therefore, positional offset, toward the side opposite the insert-through hole 22, of the guide piece 20 with respect to the anchor plate 12 can be suppressed more effectively.

Moreover, the portion, that is between the end surface at the through-hole 16 side of the thick portion 18 and the peripheral surface (the planar portion 18A) of the portion at the side opposite the through-hole 16 of the thick portion 18, is made to be the corner portion 18B. Therefore, due to the guide piece 20 being anchored effectively on the corner portion 18B, positional offset, toward the insert-through hole 22 side and the side opposite the insert-through hole 22, of the guide piece 20 with respect to the anchor plate 12 can be suppressed more effectively.

Further, the anchor plate 12 thickness direction dimension of the through-hole 16 side end of the thick portion 18 is made to be larger than the end, that is at the side opposite the through-hole 16, of the thick portion 18. Therefore, the angle of inclination, with respect to the anchor plate 12 plate surface, of the planar portion 18A and the width dimension W of the planar portion 18A, that correspond to the combination of the thickness dimension of the anchor plate 12 and the thickness dimension of the guide piece 20 (the position of the slide surface 22A in particular), can be set arbitrarily.

### [Sixth Embodiment]

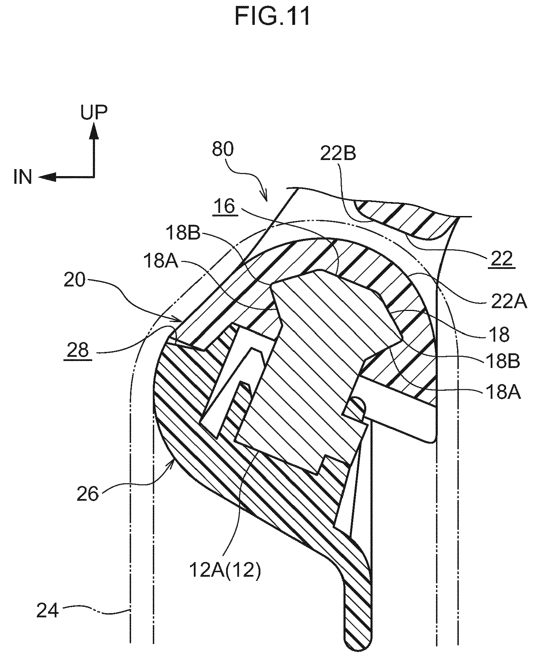

A through anchor 80 (webbing hanger) relating to a sixth embodiment of the present invention is shown in Fig. 11 in a cross-sectional view (a cross-sectional view at the position of line 7-7 of Fig. 1).

The through anchor 80 relating to the present embodiment is a structure that is substantially similar to the above-described first embodiment, but differs with respect to the following point.

As shown in Fig. 11, at the through anchor 80 relating to the present embodiment, at the anchor plate 12, the cross-section, as seen from the vehicle longitudinal direction, of the thick portion 18 is made to be a substantially hexagonal shape, and the end surface at the through-hole 16 side of the thick portion 18 is planar and is disposed perpendicularly with respect to the plate surface of the anchor plate 12.

The peripheral surface of the through-hole 16 side portion of the thick portion 18 (except for the end surface at the through-hole 16 side) is made to be planar, and is inclined in the direction heading toward the anchor plate 12 thickness direction inner side while heading toward the through-hole 16 side (is inclined in the direction heading toward the anchor plate 12 thickness direction outer side while heading toward the side opposite the through-hole 16). The peripheral surface of the portion, that is at the side opposite the through-hole 16, of the thick portion 18 is made to be the planar portion 18A, and the planar portion 18A is inclined in the direction heading toward the anchor plate 12 thickness direction outer side while heading toward the through-hole 16 side.

The portion, that is between the peripheral surface of the through-hole 16 side portion of the thick portion 18 and the peripheral surface (the planar portion 18A) of the portion at the side opposite the through-hole 16 of the thick portion 18, is made to be the corner portion 18B. The corner portion 18B projects-out toward the anchor plate 12 thickness direction outer side, and the interior angle thereof is made to be an acute angle.

Here, the through anchor 80 relating to the present embodiment as well can exhibit operation and effects that are similar to those of the above-described first embodiment.

In particular, the end surface, that is at the side opposite the through-hole 16, of the thick portion 18 is made to be the planar portion 18A, and is inclined in the direction heading toward the anchor plate 12 thickness direction outer side while heading toward the through-hole 16 side. Therefore, positional offset, toward the insert-through hole 22 side, of the guide piece 20 with respect to the anchor plate 12 can be suppressed more effectively.

Moreover, the end surface at the through-hole 16 side of the thick portion 18 is made to be planar and is disposed perpendicularly with respect to the plate surface of the anchor plate 12. Therefore, positional offset, toward the side opposite the insert-through hole 22, of the guide piece 20 with respect to the anchor plate 12 can be suppressed more effectively.

Moreover, the portion, that is between the peripheral surface of the through-hole 16 side portion of the thick portion 18 and the peripheral surface (the planar portion 18A) of the portion at the side opposite the through-hole 16 of the thick portion 18, is made to be the corner portion 18B. Therefore, due to the guide piece 20 being anchored effectively on the corner portion 18B, positional offset, toward the insert-through hole 22 side and the side opposite the insert-through hole 22, of the guide piece 20 with respect to the anchor plate 12 can be suppressed more effectively.

Further, the peripheral surface of the through-hole 16 side portion of the thick portion 18 (except for the end surface at the through-hole 16 side) is made to be planar, and is inclined in the direction heading toward the anchor plate 12 thickness direction inner side while heading toward the through-hole 16 side. Therefore, the thickness dimension of the slide surface 22A position of the guide piece 20 can more easily be made to be large, and the strength that is needed at the slide surface 22A position of the guide piece 20 with respect to load, that is inputted from the vehicle occupant via the webbing 24 to the slide surface 22A of the guide piece 20 at the time of an emergency of the vehicle (at the time of a collision or the like), can be ensured more easily. Due thereto, decreasing the size of the anchor plate 12 can be made to be even more possible.

### [Seventh Embodiment]

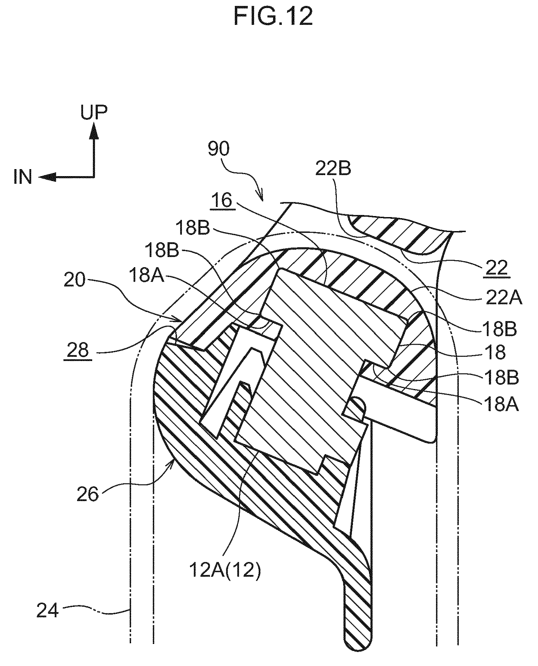

A through anchor 90 (webbing hanger) relating to a seventh embodiment of the present invention is shown in Fig. 12 in a cross-sectional view (a cross-sectional view at the position of line 7-7 of Fig. 1).

The through anchor 90 relating to the present embodiment is a structure that is substantially similar to the above-described first embodiment, but differs with respect to the following point.

As shown in Fig. 12, at the through anchor 90 relating to the present embodiment, at the anchor plate 12, the cross-section, as seen from the vehicle longitudinal direction, of the thick portion 18 is made to be substantially rectangular, and the end surface at the through-hole 16 side of the thick portion 18 is planar and is disposed perpendicularly with respect to the plate surface of the anchor plate 12. The end surface, that is at the side opposite the through-hole 16, of the thick portion 18 is made to be the planar portion 18A, and the planar portion 18A extends-out at a right angle toward the anchor plate 12 thickness direction outer side.

The corner portions 18B are formed at the anchor plate 12 thickness direction both end portions, at the end portion at the through-hole 16 side of the thick portion 18 and at the end portion that is at the side opposite the through-hole 16 of the thick portion 18. The corner portions 18B project-out toward the anchor plate 12 thickness direction outer sides, and the interior angles thereof are made to be right angles.

Here, the through anchor 90 relating to the present embodiment as well can exhibit operation and effects that are similar to those of the above-described first embodiment.

In particular, the end surface, that is at the side opposite the through-hole 16, of the thick portion 18 is made to be the planar portion 18A, and extends-out at right angles toward the anchor plate thickness direction outer sides. Therefore, positional offset, toward the insert-through hole 22 side, of the guide piece 20 with respect to the anchor plate 12 can be suppressed more effectively.

Moreover, the end surface at the through-hole 16 side of the thick portion 18 is made to be planar, and is disposed perpendicularly with respect to the plate surface of the anchor plate 12. Therefore, positional offset, toward the side opposite the insert-through hole 22, of the guide piece 20 with respect to the anchor plate 12 can be suppressed more effectively.

Moreover, the corner portions 18B are formed at the anchor plate 12 thickness direction both end portions, at the end portion at the through-hole 16 side of the thick portion 18 and the end portion that is at the side opposite the through-hole 16 of the thick portion 18. Therefore, due to the guide piece 20 being anchored effectively on the corner portions 18B, positional offset, toward the insert-through hole 22 side and the side opposite the insert-through hole 22, of the guide piece 20 with respect to the anchor plate 12 can be suppressed more effectively.

Note that, in the above-described first embodiment through seventh embodiment, the thick portion 18 is provided at the entire peripheral direction edge portion of the through-hole 16 of the anchor plate 12. However, the thick portion 18 may be provided only at the edge portions that are at the upper side and the lower side of the through-hole 16 central portion of the anchor plate 12.

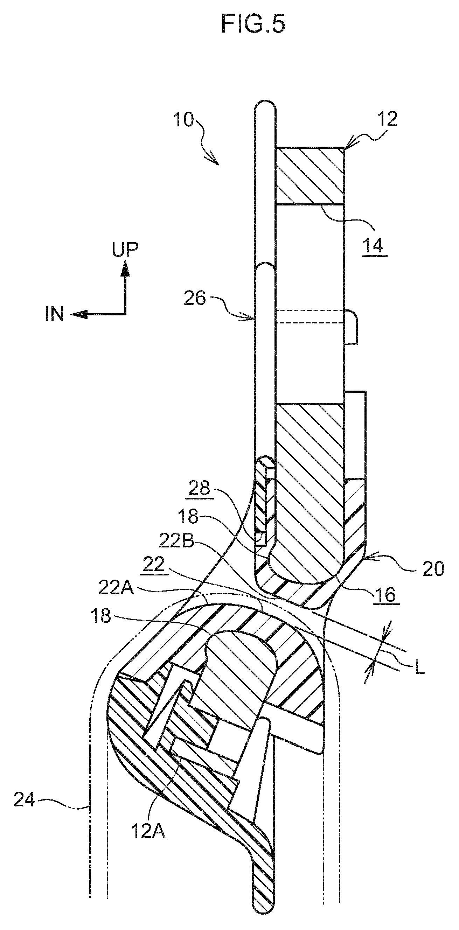

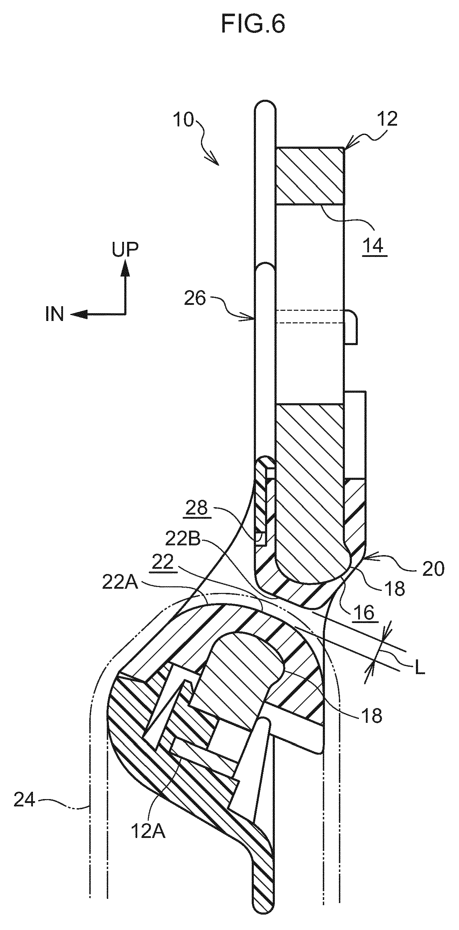

Moreover, in the above-described first embodiment through seventh embodiment, the thick portion 18 of the anchor plate 12 is made to protrude-out toward the vehicle transverse direction inner side and the vehicle transverse direction outer side. However, the thick portion 18 of the anchor plate 12 may be made to protrude-out only toward the vehicle transverse direction inner side (see Fig. 5 for example), or, the thick portion 18 of the anchor plate 12 may be made to protrude-out only toward the vehicle transverse direction outer side (see Fig. 6 for example). Moreover, the thick portion 18 of one of the upper side and the lower side of the through-hole 16 may be made to protrude-out toward the vehicle transverse direction inner side and the vehicle transverse direction outer side, and the thick portion 18 of the other of the upper side and the lower side of the through-hole 16 may be made to protrude-out only toward the vehicle transverse direction inner side or only toward the vehicle transverse direction outer side. Moreover, the thick portion 18 of one of the upper side and the lower side of the through-hole 16 may be made to protrude-out only toward the vehicle transverse direction inner side, and the thick portion 18 of the other of the upper side and the lower side of the through-hole 16 may be made to protrude-out only toward the vehicle transverse direction outer side.

Further, in the above-described first embodiment through seventh embodiment, the through anchors 10, 40, 50, 60, 70, 80, 90 are applied to a slip joint. However, the through anchors 10, 40, 50, 60, 70, 80, 90 may be applied to a tongue.

### Explanation of Reference Numerals

- 10: through anchor
- 12: anchor plate (main body member)
- 12A: outer peripheral end surface
- 16: through-hole
- 18: thick portion
- 18A: planar portion
- 18B: corner portion
- 20: guide piece (slide supporting member)
- 24: webbing
- 40: through anchor
- 50: through anchor
- 60: through anchor
- 70: through anchor
- 80: through anchor
- 90: through anchor

## Claims

1. A through anchor comprising:
a main body member in which is formed a through-hole through which a webbing, that is applied to an occupant of a vehicle, is inserted;
a thick portion that is provided at an edge portion of a through-hole periphery of the main body member, and whose main body member thickness direction dimension is made to be larger than other portions of the main body member; and
a slide supporting member that is fixed to the periphery of the through-hole excepting an entire outer peripheral end surface of the main body member, and that slidably supports the webbing.

2. The through anchor of Claim 1, wherein a peripheral surface of the thick portion is curved.

3. The through anchor of Claim 1 or Claim 2, wherein a planar portion is provided at a portion, that is at a side opposite the through-hole, of the thick portion.

4. The through anchor of any one of Claim 1 through Claim 3, wherein a peripheral surface, that is at a side opposite the through-hole, of the thick portion extends-out toward a main body member thickness direction outer side.

5. The through anchor of any one of Claim 1 through Claim 4, wherein a peripheral surface, that is at a side opposite the through-hole, of the thick portion is inclined in a direction heading toward a main body member thickness direction outer side while heading toward a through-hole side.

6. The through anchor of any one of Claim 1 through Claim 5, wherein a peripheral surface at a through-hole side of the thick portion is inclined in a direction heading toward a main body member thickness direction inner side while heading toward the through-hole side.

7. The through anchor of any one of Claim 1 through Claim 6, comprising a corner portion that is provided at the thick portion and that projects-out toward a main body member thickness direction outer side.

8. The through anchor of any one of Claim 1 through Claim 7, wherein an end surface at a through-hole side of the thick portion is made to be planar.
